Europäisches Patentamt

European Patent Office

Office européen des brevets

(11) Veröffentlichungsnummer: **0 299 288**

A2

## (12) EUROPÄISCHE PATENTANMELDUNG

(21) Anmeldenummer: 88110451.7

(22) Anmeldetag: 30.06.88

(51) Int. Cl.4: **B65B 19/04**

(30) Priorität: 11.07.87 DE 3723001

(43) Veröffentlichungstag der Anmeldung:
18.01.89 Patentblatt 89/03

(84) Benannte Vertragsstaaten:
AT BE CH DE ES FR GB IT LI NL SE

(71) Anmelder: KÖRBER AG
Kampchaussee 8-32 Postfach 80 04 60
D-2050 Hamburg 80(DE)

(72) Erfinder: Deutsch, Reinhard
Tilsiter Strasse 10
D-2054 Geesthacht(DE)

(54) **Vorrichtung zum Überführen von blockförmigen Artikelgruppen der tabakverarbeitenden Industrie.**

(57) In einer Packmaschine zum Verpacken von blockförmigen Zigarettengruppen (9) werden die in Aufnahmetaschen (23) von Zufördermitteln (17) auf einem diskontinuierlichen Förderabschnitt (13) gebildeten Zigarettengruppen von Aufnahmetaschen (8) eines rotativ antreibbaren Übergabeförderers (1) in dessen Haltestellung übernommen und auf einem kontinuierlichen Förderabschnitt (18), auf dem die Übergabeförderer und Abfördermittel (19) auf einem Kreisbahnabschnitt (Pfeil 29) parallel verlaufend und synchron antreibbar sind, in zu den Aufnahmetaschen der Übergabeförderer fluchtende Aufnahmetaschen (24) der Abfördermittel radial zur Drehachse (2) der Übergabeförderer überführt.

Fig. 1

## Vorrichtung zum Überführen von blockförmigen Artikelgruppen der tabakverarbeitenden Industrie

Die Erfindung betrifft eine Vorrichtung zum Überführen von zu verpackenden Artikelgruppen aus stabförmigen Artikeln der tabakverarbeitenden Industrie von diskontinuierlich bzw. taktweise antreibbaren, Aufnahmetaschen für die Artikelgruppen aufweisenden Zufördermitteln auf kontinuierlich antreibbare, ebenfalls Aufnahmetaschen aufweisende Abfördermittel.

Nach der DE-OS 19 09 777 ist es bei Packmaschinen bekannt, Packungen aus dem Stillstand mittels eines hin- und herschwingenden Trägers auf die Geschwindigkeit eines Abförderers zu beschleunigen und in dessen Packungstaschen zu überführen.

Der Erfindung liegt die Aufgabe zugrunde, eine Überführungsvorrichtung der eingangs bezeichneten Gattung weiter zu verbessern, insbesondere zu vereinfachen und an höhere Förderleistungen anzupassen.

Diese Aufgabe wird erfindungsgemäß dadurch gelöst, daß jeweils paarweise zusammenwirkende, im Bereich der Zufördermittel diskontinuierlich und im Bereich der Abfördermittel kontinuierlich, separat und rotativ um eine gemeinsame Drehachse antreibbare, mit Aufnahmetaschen versehene Übergabeförderer vorgesehen sind, deren Aufnahmetaschen in einer Raststellung auf dem diskontinuierlichen Förderabschnitt parallel zur Drehachse mit den Aufnahmetaschen der Zufördermittel fluchten und über einen Teilbereich des kontinuierlichen Förderabschnitts radial zur Drehachse mit den Aufnahmetaschen der Abfördermittel fluchten. Eine ausreichende Zeit für einen Überführungsvorgang und damit eine schonende Übergabe der Artikelgruppen ist nach einer Weiterbildung der Erfindung dadurch gewährleistet, daß der Teilbereich des kontinuierlichen Förderabschnittes durch einen gemeinsamen Kreisbahnabschnitt von Übergabeförderern und Abfördermitteln gebildet wird.

Zweckmäßigerweise sind die Übergabeförderer als rotierende Arme ausgebildet, in deren freie Enden die Aufnahmetaschen eingelassen sind.

Ein Synchronlauf und Parallellauf der zusammenwirkenden Fördermittel ist nach einer Weiterbildung am besten dadurch gewährleistet, daß die Abfördermittel als Endlosförderer ausgebildet sind, dessen band- bzw. kettenförmiges, die Aufnahmetaschen tragendes Trum in seinem Verlauf über den gemeinsamen Kreisbahnabschnitt der Kreisbahn der Übergabeförderer angepaßt ist.

Eine sich räumlich und funktionell in die Überführungsvorrichtung optimal einfügende Anordnung der Übergabeförderer ist nach einem weiteren Vorschlag dadurch möglich, daß die Zufördermittel als die Artikelgruppen in den Aufnahmetaschen in Blockformation aufnehmende Endlosförderer ausgebildet sind, deren Aufnahmetaschen in einer Umlenkzone der Endlosförderer mit den Aufnahmetaschen des Übergabeförderers fluchten.

Gemäß einer Weiterbildung ist eine zusätzliche Leistungssteigerung der Überführungsvorrichtung dadurch möglich, daß zwei synchron antreibbare Paare von Übergabeförderern vorgesehen sind, die jeweils eigenen Zufördermitteln und entsprechend angepaßten Kreisbahnabschnitten der Abfördermittel zugeordnet sind.

Eine besonders kompakte Bauweise der Überführungsvorrichtung wird gemäß einer Variante der Erfindung dadurch erzielt, daß jeweils zwei zugleich im Bereich der Zufördermittel zusammenwirkende Übergabeförderer und zwei zugleich im Bereich der Abfördermittel zusammenwirkende Übergabeförderer der Paare von Übergabeförderern zu einem Doppelarm vereinigt sind.

Der mit der Erfindung erzielte Vorteil besteht darin, daß durch jeweils zwei im Wechsel zwischen Stillstand und der Geschwindigkeit der Abfördermittel ausschließlich in deren Bewegungsrichtung rotierende Übergabeförderer eine leistungsfähige, zügig arbeitende Überführungsvorrichtung für relativ große Durchsatzmengen der zu verpackenden Gegenstände möglich wurde.

Die Erfindung wird nachstehend anhand der in den beigefügten Abbildungen dargestellten Ausführungsbeispiele näher erläutert.

Hier zeigt:

Figur 1 eine schematische Seitenansicht einer Überführungsvorrichtung für eine Packmaschine der Tabakindustrie,

Figur 2 eine abgewandelte Ausführungsform der Überführungsvorrichtung und

Figur 3 einen Schnitt durch einen Übergabeförderer der Überführungsvorrichtung nach der Linie III-III gemäß den Figuren 1 und 2.

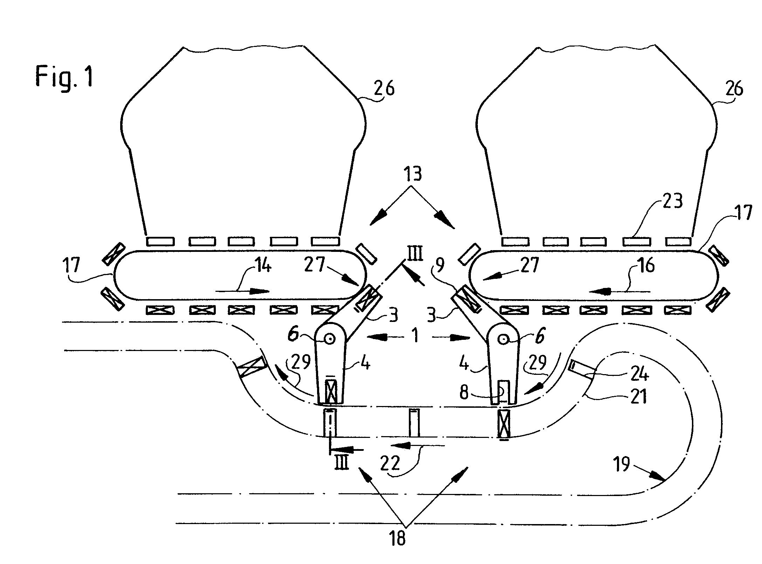

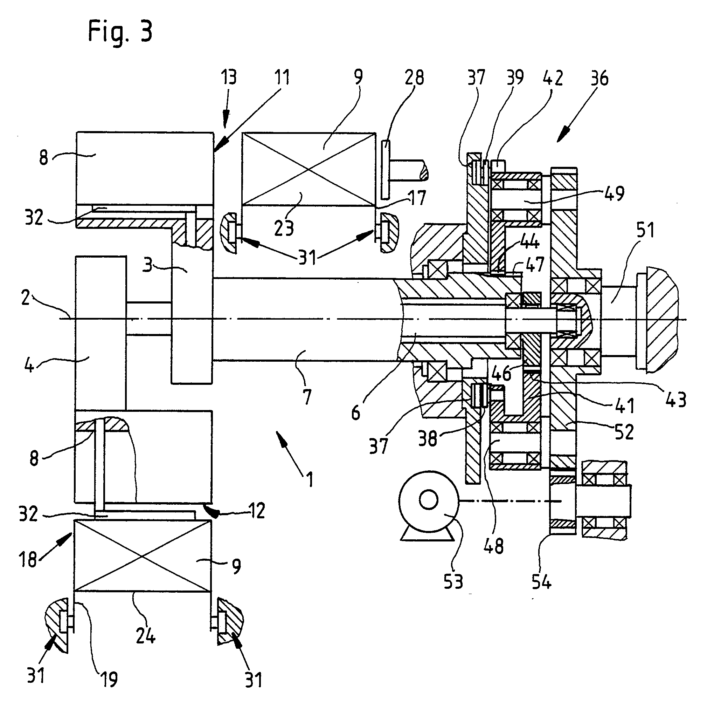

Die in Figur 1 dargestellte Überführungsvorrichtung weist zwei Paare von Übergabeförderern 1 auf, die jeweils aus zwei um eine gemeinsame Achse 2 rotierend antreibbaren Armen 3 und 4 bestehen. Zur Realisierung der gemeinsamen Drehachse 2 ist gemäß Figur 3 der Arm 4 mit einer Antriebswelle 6 versehen, die durch eine Antriebshohlwelle 7 des Armes 3 hindurchgeführt ist. Jeder der rotierenden Arme 3 und 4 trägt an seinem äußeren freien Ende eine Aufnahmetasche 8 für blockförmige Zigarettengruppen 9. Die Aufnahmetaschen 8 sind bezogen auf die Drehachse 2 der Übergabeförderer 1 mit einer achsparallelen Einschuböffnung 11 und mit einer radialen Ausschuböffnung 12 ausgestattet. Die Arme 3 und 4 der Übergabeförderer 1 arbeiten in einem diskontinuierlichen Förderabschnitt 13 mit den achsparallelen Einschuböffnungen 11 ihrer Aufnahmetaschen 8 mit Zufördermitteln in Form von schrittweise in Richtung der Pfeile 14 bzw. 16 antreibbaren Endlosförderern 17 und im Bereich eines kontinuierlichen Förderabschnittes 18 mit den radialen Ausschuböffnungen 12 ihrer Aufnahmetaschen 8 mit Abfördermitteln in Form eines Endlosförderers 19 zusammen, welcher mit seinem oberen, den Übergabeförderern 1 zugewandten Fördertrum 21 in Richtung des Pfeils 22 kontinuierlich angetrieben wird.

Sowohl die Endlosförderer 17 der Zufördermittel als auch der Endlosförderer 19 der Abfördermittel weisen Aufnahmetaschen 23 bzw. 24 für die blockförmigen Zigarettengruppen 9 auf, welche auf bekannte Weise aus Zigaretten zusammengestellt werden, die lagenweise aus Magazinschächten 26 längsaxial in die Aufnahmetaschen 23 der Endlosförderer 17 überführt werden, indem diese schrittweise an den Magazinschächten 26 entlanggeführt werden.

Bei jedem derartigen Überführungsschritt gelangt auch jeweils eine mit einer vollständigen blockförmigen Zigarettengruppe 9 gefüllte Aufnahmetasche 23 der Endlosförderer 17 jeweils in einer Umlenkzone 27 der Endlosförderer 17 in eine längsaxiale bzw. achsparallele Fluchtstellung mit einer Aufnahmetasche 8 eines der Arme, im dargestellten Beispiel gemäß Figur 1 des Armes 3, der Übergabeförderer 1. Im Ausführungsbeispiel gemäß Figur 1 nehmen die Arme 3 der Übergabeförderer 1 diese Fluchtstellung während ihres Stillstandes im Bereich der Umlenkzone 27 ein. Dabei wird je Übergabeförderer 1 eine Zigarettengruppe 9 mittels eines Stößels 28 gemäß Figur 3 aus einer Aufnahmetasche 23 der Endlosförderer 17 längsaxial bezogen auf die Drehachse 2 der Übergabeförderer 1 in eine Aufnahmetasche 8 der Arme 3 geschoben. Während dieses längsaxialen Einschubes über die Einschuböffnung 11 der Aufnahmetaschen 8 bewegen sich die Arme 4 der Übergabeförderer 1 kontinuierlich in Richtung der Pfeile 29, wobei der kontinuierliche Förderabschnitt 18 sowohl einen Teil einer Kreisbahn der Arme 4 als auch einer parallel dazu verlaufenden Teilkreisbahn des Fördertrums 21 des Endlosförderers 19 umfaßt. Zu diesem Zweck ist der Endlosförderer 19 gemäß Figur 3 mit seinem oberen Fördertrum 21 durch eine entsprechend geformte ortsfeste Rollenbahn 31 geführt. Die Umfangsgeschwindigkeiten der Arme 4 und des Fördertrums 21 sind derart aufeinander abgestimmt, daß die Arme 4 mit den Aufnahmetaschen 8 synchron und fluchtend mit den Aufnahmetaschen 24 des Endlosförderers 19 auf der gesamten Teilkreisbahn in Richtung der Pfeile 29 bewegt werden. Während dieses Gleichlaufes der Arme 4 und des Fördertrums 21 besteht ausreichend Zeit, um die Zigarettengruppen 9 radial zur Drehachse 2 der Übergabeförderer 1 aus den Aufnahmetaschen 8 der Arme 4 in die Aufnahmetaschen 24 des Endlosförderers 19 zu überführen, was mittels eines Stößels 32 gemäß Figur 3 über die radiale Ausschuböffnung 12 der Aufnahmetaschen 8 erfolgt. Für den rechten Arm ist dieser Vorgang am Ende der parallel verlaufenden Teilkreisbahnen abgeschlossen, während er für den linken Arm am Anfang der parallel verlaufenden Teilkreisbahnen gerade beginnt.

Im darauffolgenden Überführungszyklus werden die entgegengesetzten Arme 3 aus dem Stillstand in die kontinuierliche Bewegungsphase versetzt, um ebenfalls im Gleichlauf mit dem Endlosförderer 19 ihre Zigarettengruppen zu übergeben, während nunmehr die Arme 4 Zigarettengruppen im Stillstand von den Endlosförderern 17 übernehmen. Auf diese Weise kann einerseits ungestört eine Blockbildung der Zigarettengruppen ungehindert schrittweise erfolgen, während andererseits die kontinuierliche Abförderung der zusammengestellten Zigarettengruppen 9 auf optimale Weise in den Arbeitsprozeß der nicht weiter dargestellten Verpackungseinrichtung integriert ist.

Zur Realisierung der Umlauf-Rastphasen der Arme 3 und 4 mit entsprechender Beschleunigung aus dem Stillstand bis zum kontinuierlichen Förderabschnitt und entsprechender Verzögerung aus dem kontinuierlichen Förderabschnitt bis zum Stillstand wird ein sogenanntes Umlauf-Rastgetriebe 36 gemäß Figur 3 eingesetzt. Dieses weist eine ortsfeste, endlose Steuerkurve 37 auf, in der Steuerrollen 38 und 39 von zwei der inneren Antriebswelle 6 bzw. der äußeren Antriebshohlwelle 7 zugeordneten Rollenhebeln 41 bzw. 42 geführt sind, die am inneren Ende mit einer Verzahnung 43 bzw. 44 versehen sind. Die Verzahnungen 43 und 44 kämmen jeweils mit einem mit der Antriebswelle 6 bzw. der Antriebshohlwelle 7 fest verbundenen Zahnsegment 46 bzw. 47. Die Rollenhebel 41 und 42 sind außerdem auf Lagern 48 bzw. 49 drehbeweglich an einem gemeinsamen, auf einem ortsfesten Lager 51 rotierenden Mitnehmer 52 gelagert, in den ein durch einen Motor 53 angetriebenes Antriebsritzel 54 eingreift. Die mit dem in Figur 1 dargestellten Winkel versetzt zueinander angeordneten Arme 4 und 3 werden da durch relativ zueinander bewegt, d. h. abwechselnd angehalten, beschleunigt, kontinuierlich geschwenkt, verzögert und wieder angehalten, daß die zugeordneten, gemeinsam mit dem Mitnehmer 52 rotierenden Rollenhebel 41 bzw. 42 eine durch die Steuerkurve 37 vermittels der Steuerrollen 38 und 39 eingeleitete überlagerte Schwenkbewegung ausführen, welche über die Zahnsegmente 46 bzw. 47 auf die Antriebswelle 6 des Arms 4 bzw. auf die Antriebshohlwelle 7 des Armes 3 übertragen wird.

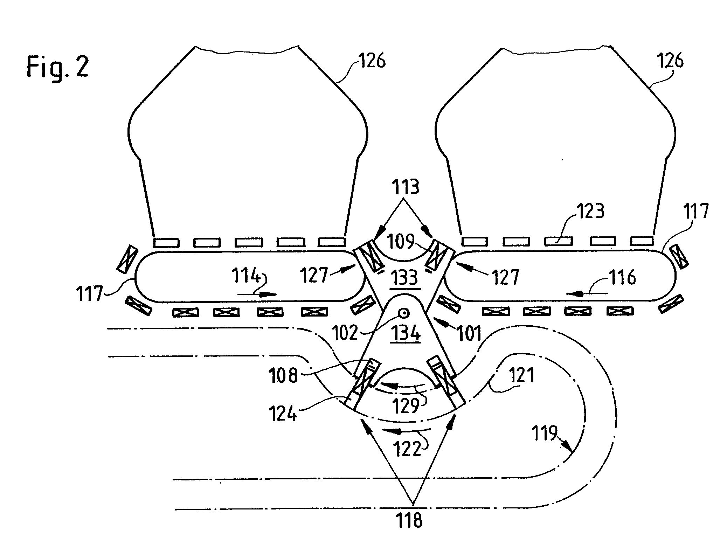

Bei der in Figur 2 dargestellten Variante der Überführungsvorrichtung, bei der Elemente, die denen der Figur 1 entsprechen, mit um hundert erhöhten Bezugszahlen versehen sind, unterscheidet sich der Übergabeförderer 1 nur dadurch vom zuvor beschriebenen Ausführungsbeispiel, daß jeweils zwei zugleich im Bereich der Zufördermittel 117 zusammenwirkende Arme zu einem Doppelarm 133 und zwei zugleich im Bereich der Abfördermittel 119 zusammenwirkende Arme zu einem Doppelarm 134 vereinigt sind. Hierdurch ergibt sich eine besonders gedrungene Bauweise der Überführungsvorrichtung.

**Ansprüche**

1. Vorrichtung zum Überführen von zu verpackenden Artikelgruppen aus stabförmigen Artikeln der tabakverarbeitenden Industrie von diskontinuierlich bzw. taktweise antreibbaren, Aufnahmetaschen für die Artikelgruppen, aufweisenden Zufördermitteln auf kontinuierlich antreibbare, ebenfalls Aufnahmetaschen aufweisende Abfördermittel, dadurch gekennzeichnet, daß jeweils paarweise zusammenwirkende, im Bereich der Zufördermittel (17; 117) diskontinuierlich und im Bereich der Abfördermittel (19; 119) kontinuierlich, separat und rotativ um eine gemeinsame Drehachse (2; 102) antreibbare, mit Aufnahmetaschen (8; 108) versehene Übergabeförderer (1; 101) vorgesehen sind, deren Aufnahmetaschen in einer Raststellung auf dem diskontinuierlichen Förderabschnitt (13; 113) parallel zur Drehachse mit den Aufnahmetaschen (23; 123) der Zufördermittel fluchten und über einen Teilbereich des kontinuierlichen Förderabschnitts (18; 118) radial zur Drehachse mit den Aufnahmetaschen (24; 124) der Abfördermittel fluchten.

2. Vorrichtung nach Anspruch 1, dadurch gekennzeichnet, daß der Teilbereich des kontinuierlichen Förderabschnitts (18; 118) durch einen gemeinsamen Kreisbahnabschnitt (Pfeile 29; 129) von Übergabeförderern (1; 101) und Abfördermitteln (19; 119) gebildet wird.

3. Vorrichtung nach den Ansprüchen 1 und/oder 2, dadurch gekennzeichnet, daß die Übergasbeförderer (1) als rotierende Arme (3, 4) ausgebildet sind, in deren freie Enden die Aufnahmetaschen (8) eingelassen sind.

4. Vorrichtung nach einem der Ansprüche 1 bis 3, dadurch gekennzeichnet, daß die Abfördermittel (19; 119) als Endlosförderer ausgebildet sind, deren band- bzw. kettenförmiges, die Aufnahmetaschen (24; 124) tragendes Fördertrum (21; 121) in seinem Verlauf über den gemeinsamen Kreisbahnabschnitt (Pfeil 29; 129) der Kreisbahn der Übergabeförderer (1; 101) angepaßt ist.

5. Vorrichtung nach einem der Ansprüche 1 bis 4, dadurch gekennzeichnet, daß die Zufördermittel (17; 117) als die Artikelgruppen (9; 109) in den Aufnahmetaschen (23; 123) in Blockformation aufnehmende Endlosförderer ausgebildet sind, deren Aufnahmetaschen in einer Umlenkzone (27; 127) der Endlosförderer mit den Aufnahmetaschen (8; 108) des Übergabeförderers (1; 101) fluchten.

6. Vorrichtung nach einem der Ansprüche 1 bis 5, dadurch gekennzeichnet, daß zwei synchron antreibbare Paare von Übergabeförderern (1) vorgesehen sind, die jeweils eigenen Zufördermitteln (17) und entsprechend angepaßten Kreisbahnabschnitten (Pfeil 29) der Abfördermittel (19) zugeordnet sind.

7. Vorrichtung nach einem der Ansprüche 1 bis 5, dadurch gekennzeichnet, daß jeweils zwei zugleich im Bereich der Zufördermittel (117) zusammenwirkende Übergabeförderer (101) und zwei zugleich im Bereich der Abfördermittel (119) zusammenwirkende Übergabeförderer der Paare von Übergabeförderern zu einem Doppelarm (133; 134) vereinigt sind.

8. Vorrichtung nach einem der Ansprüche 1 bis 7, dadurch gekennzeichnet, daß das Fördertrum (21; 121) der Abfördermittel (19; 119) durch eine ortsfeste Rollenbahn (31) geführt ist.

Fig.1

Fig. 2

## Fig. 3